# EUROPEAN PATENT APPLICATION

(11) **EP 3 206 422 A1**
(43) Date of publication of application: **16.08.2017**
(21) Application number: 15849466.6
(22) Date of filing: 16.02.2015
(51) Int. Cl.: H04W 12/06

(54) **METHOD AND DEVICE FOR CREATING SUBSCRIPTION RESOURCE**

(30) Priority: 10.10.2014 CN 201410530708
(71) Applicant: ZTE Corporation, Shenzhen, Guangdong 518057 (CN)
(72) Inventor: LI, Xiaoli, Shenzhen, Guangdong 518057 (CN); XIE, Fang, Shenzhen, Guangdong 518057 (CN); WU, Hao, Shenzhen, Guangdong 518057 (CN)
(74) Representative: Lavoix
(86) International application number: PCT/CN2015/073187
(87) International publication number: WO 2016/054888

(57) **Abstract**

A method and device for creating a subscription resource, the method comprising: a common service entity (CSE) receives a subscription resource creation request from a subscriber; when the CSE determines, according to the subscription resource creation request, that the subscriber has the rights to create a subscription resource, to read the subscription resource, to send notification message to the recipient corresponding to the recipient identification of the notification message in the subscription resource creation request, and that the subscription resource is a subscribable resource, creating a subscription resource under the subscription resource corresponding to the subscription resource address in the subscription resource creation request, and sending to the subscriber a message indicating successful creation of subscription resource. The solution of an embodiment of the present invention prevents malicious resource subscription for a user and improves user subscription experience.

## Description

### TECHNICAL FIELD

The disclosure relates to the field of Machine Type Communication (MTC), and in particular to a method and device for creating a subscription resource.

### BACKGROUND

The Machine To Machine (M2M) communication network is composed of various M2M nodes and a bearer network. The M2M nodes communicate through the bearer network. An M2M node at least includes an Application Entity (AE) or a Common Service Entity (CSE). The AE is a logical unit that performs an M2M application. The CSE is a logical unit that manages and serves the M2M application.

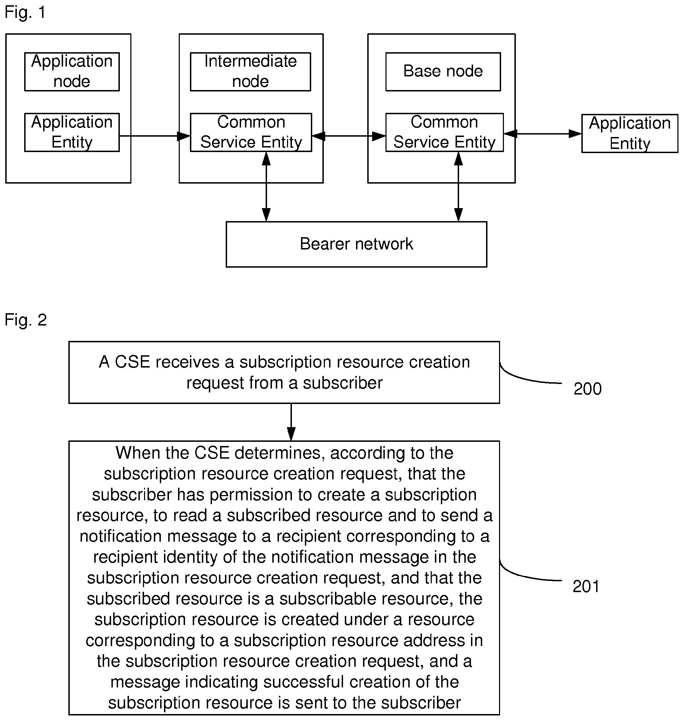

Fig. 1 is a schematic structural diagram of an M2M system architecture. As shown in Fig. 1, in the M2M system architecture, the M2M nodes can be an application node, or an intermediate node, or a base node. The application node is an end execution node, such as a smart meter, a temperature measuring and controlling sensor, a fire alarm, a smart appliance, etc. The intermediate node is a middleware that connects the end execution node to a server on the network side, such as the gateway. The base node is the server on the network side. The AE registered on the base node is usually a management software or management platform of the M2M service provider.

The communication between the AEs is implemented through the interaction between the CSEs, and the AE first needs to register in the CSE (if in Fig. 1, the AE on the application node needs to register in the CSE on the intermediate node, the CSE on the intermediate node is the registered CSE of the AE on the application node), and then the interaction between the AEs can be implemented through the communication between the CSEs.

As shown in Fig. 1, the application node is a physical entity, and AE is a logical unit and is a logical unit that really performs the application on the application node which is a physical entity. When the AE is registered on the CSE, the AE needs to provide the security certificate identifying its own legitimacy to the CSE for verification. It can be registered on the CSE only when passing through the verification, and the AE also need to provide the registered name suggested by the AE to the CSE for reference.

After being registered, the AE can also create application-related resources on the registered CSE, as sub-resources for the application resource. For example, after being registered, the AE creates the resource "application" on the CSE. In order to save the application data, the application can also create a resource "container" under the resource "application", and the resource "container" is used to save the AE-related data.

AE can acquire a message about whether a resource changes in a subscribing manner, that is, pre-creating a subscription resource. When the CSE determines that a resource corresponding to a subscribed resource address in the created subscription resources changes (for example, the value of the attribute of the resource corresponding to the subscribed resource address is modified, a sub-resource is deleted, or a sub-resource is newly created, etc.), the CSE sends a resource change message to a recipient of a notification message in the created subscription resource.

In the existing method for creating a subscription resource, since the recipient of the notification message in the subscription resource creation may be a subscriber itself or other AEs or CSEs, the resource may be maliciously subscribed for the user, thereby reducing the user's subscription experience.

### SUMMARY

In order to solve the above problems, the disclosure proposes a method and device for creating a subscription resource, which can prevent malicious resource subscription for a user and improve the user's subscription experience.

In order to achieve the above objectives, the following technical solutions are adopted.

A method for creating a subscription resource, including: a Common Service Entity (CSE) receives a subscription resource creation request from a subscriber; and when the CSE determines, according to the subscription resource creation request, that the subscriber has permission to create a subscription resource, to read a subscribed resource and to send a notification message to a recipient corresponding to a recipient identity of the notification message in the subscription resource creation request, and that the subscribed resource is a subscribable resource, a subscription resource is created under a resource corresponding to a subscription resource address in the subscription resource creation request, and a message indicating successful creation of the subscription resource is sent to the subscriber.

In an embodiment, the method may further include:
a message indicating failed creation of the subscription resource is sent to the subscriber when the CSE determines, according to the subscription resource creation request, one or more of the following conditions that:
   the subscriber does not have permission to create a subscription resource;
   the subscribed resource is not a subscribable resource;
   the subscriber does not have permission to read the subscribed resource; and
   the subscriber does not have permission to send a notification message to the recipient corresponding to the recipient identity of the notification message in the subscription resource creation request.

In an embodiment, the operation that the CSE determines, according to the subscription resource creation request, that the subscriber has permission to send a notification message to the recipient corresponding to the recipient identity of the notification message in the subscription resource creation request may include:
the CSE determines, according to the subscriber identity in the subscription resource creation request, that the recipient corresponding to the recipient identity of the notification message in the subscription resource creation request is the subscriber itself; or
the CSE determines, according to the subscriber identity in the subscription resource creation request, that the recipient corresponding to the recipient identity of the notification message in the subscription resource creation request is not the subscriber itself; and the CSE sends a notification verification request message to the recipient, and receives a response message from the recipient indicating that the subscriber has permission to send a notification message to the recipient.

In an embodiment, the operation that CSE determines, according to the subscription resource creation request, that the subscriber does not have permission to send a notification message to the recipient corresponding to the recipient identity of the notification message in the subscription resource creation request may include:
the CSE determines, according to the subscriber identity in the subscription resource creation request, that the recipient corresponding to the recipient identity of the notification message in the subscription resource creation request is not the subscriber itself; and
the CSE sends a notification verification request message to the recipient, and receives a response message from the recipient indicating that the subscriber does not have permission to send a notification message to the recipient.

A device for creating a subscription resource, arranged in a CSE, including:
a receiving module arranged to receive a subscription resource creation request from a subscriber; and
a processing module arranged to, when it is determined, according to the subscription resource creation request, that the subscriber has permission to create a subscription resource, to read a subscribed resource and to send a notification message to a recipient corresponding to a recipient identity of the notification message in the subscription resource creation request, and that the subscribed resource is a subscribable resource, create a subscription resource under a resource corresponding to a subscription resource address in the subscription resource creation request, and send to the subscriber a message indicating successful creation of the subscription resource.

In an embodiment, the processing module may include:
a determining sub-module;
a creating sub-module arranged to, when the determining sub-module determines, according to the subscription resource creation request, that the subscriber has permission to create a subscription resource, to read the subscribed resource and to send a notification message to the recipient corresponding to the recipient identity of the notification message in the subscription resource creation request, and that the subscribed resource is a subscribable resource, create the subscription resource under the resource corresponding to the subscription resource address in the subscription resource creation request; and
a sending sub-module arranged to send to the subscriber the message indicating successful creation of the subscription resource after the creating sub-module creates the subscription resource.

In an embodiment, the sending sub-module may be further arranged to send to the subscriber a message indicating failed creation of the subscription resource when the determining sub-module determines, according to the subscription resource creation request, one or more of the following conditions that:
the subscriber does not have permission to create a subscription resource;
the subscribed resource is not a subscribable resource;
the subscriber does not have permission to read the subscribed resource; and
the subscriber does not have permission to send a notification message to the recipient corresponding to the recipient identity of the notification message in the subscription resource creation request.

In an embodiment, the operation that the determining sub-module determines that the subscriber has permission to send a notification message to the recipient corresponding to the recipient identity of the notification message in the subscription resource creation request may refer to:
the determining sub-module determines, according to the subscriber identity in the subscription resource creation request, that the recipient corresponding to the recipient identity of the notification message in the subscription resource creation request is the subscriber itself; or
the determining sub-module determines, according to the subscriber identity in the subscription resource creation request, that the recipient corresponding to the recipient identity of the notification message in the subscription resource creation request is not the subscriber itself, instructs the sending sub-module to send a notification verification request message to the recipient, and knows that the receiving module receives a response message from the recipient indicating that the subscriber has permission to send the notification message to the recipient.

In an embodiment, the operation that the determining sub-module determines that the subscriber does not have permission to send a notification message to the recipient corresponding to the recipient identity of the notification message in the subscription resource creation request may refer to:
the determining sub-module determines that the recipient corresponding to the recipient identity of the notification message in the subscription resource creation request is not the subscriber itself, instructs the sending sub-module to send a notification verification request message to the recipient, and knows that the receiving module receives a response message from the recipient indicating that the subscriber does not have permission to send the notification message to the recipient.

Compared with the related art, an embodiment of the disclosure includes that: a CSE receives a subscription resource creation request from a subscriber; when the CSE determines, according to the subscription resource creation request, that the subscriber has permission to create a subscription resource, the subscribed resource is a subscribable resource, and the subscriber has permission to read the subscribed resource, it is determined, according to the subscriber identity in the subscription resource creation request, that the subscriber has permission to send a notification message to the recipient corresponding to the recipient identity of the notification message in the subscription resource creation request, creates a subscription resource under a resource corresponding to a subscription resource address in the subscription resource creation request, and sends to the subscriber a message indicating successful creation of the subscription resource. With the solution of an embodiment of the disclosure, only after it is determined, according to the subscriber identity in the subscription resource creation request, that the subscriber has permission to send a notification message to the recipient corresponding to the recipient identity of the notification message in the subscription resource creation request, a subscription resource is created under a resource corresponding to a subscription resource address in the subscription resource creation request, thus malicious resource subscription for a user is prevented and the user's subscription experience is improved.

### BRIEF DESCRIPTION OF THE DRAWINGS

The drawings in the embodiment of the disclosure are described here to provide further understanding of the disclosure, and are for the purpose of explaining the disclosure together with the specification, and do not form limits to the scope of protection of the disclosure.
Fig. 1 is a composition schematic diagram of an M2M system architecture;
Fig. 2 is a flow diagram of a method for creating a subscription resource according to an embodiment of the disclosure;
Fig. 3 is a flow diagram of an embodiment of a method for creating a subscription resource according to an embodiment of the disclosure; and
Fig. 4 is a structure composition schematic diagram of a device for creating a subscription resource according to an embodiment of the disclosure.

### DETAILED DESCRIPTION

In order to facilitate the understanding by those skilled in the art, the disclosure will now be described in further detail with reference to the accompanying drawings, and is not intended to limit the scope of protection of the disclosure. It is to be noted that the embodiments in the present application and various manners in the embodiments may be combined with each other under the condition of no conflicts.

Referring to Fig. 2, an embodiment of the disclosure provides a method for creating a subscription resource, including the following steps 200-201.

In Step 200, the CSE receives a subscription resource creation request from a subscriber.

In this step, the subscriber can be AE.

In this step, the subscription resource creation request includes the subscription resource name, the subscription resource type, the subscription resource address, and the subscribed resource address and content, the content includes the attribute of the subscription resource, and the attribute of the subscription resource includes the subscriber identity, the recipient identity of the notification message, and the address of the recipient.

In Step 201, when the CSE determines, according to the subscription resource creation request, that the subscriber has permission to create a subscription resource, to read the subscribed resource and to send a notification message to the recipient corresponding to the recipient identity of the notification message in the subscription resource creation request, and that the subscribed resource is a subscribable resource, a subscription resource is created under a resource corresponding to a subscription resource address in the subscription resource creation request, and a message indicating successful creation of the subscription resource is sent to the subscriber.

Optionally, in this step, the CSE determines, according to the subscription resource creation request, that the subscriber has permission to create a subscription resource and to read the subscribed resource, including that:
the CSE determines, according to the subscriber identity in the subscription resource creation request, that the subscriber has permission to create a subscription resource, and determines, according to the subscriber identity in the subscription resource creation request, that the subscriber has permission to read the subscribed resource;
the CSE determines, according to the subscription resource creation request, that the subscribed resource is a subscribable resource, including that:
   the CSE determines, according to the subscribed resource address in the subscription resource creation request, that the subscribed resource is a subscribable resource.

In this step, whether the subscribed resource is a subscribable resource can be set internally by the CSE and identified internally.

Optionally, in this step, the CSE determines, according to the subscription resource creation request, that the subscriber has permission to send a notification message to the recipient corresponding to the recipient identity of the notification message in the subscription resource creation request, including that:
the CSE determines, according to the subscriber identity in the subscription resource creation request, that the recipient corresponding to the recipient identity of the notification message in the subscription resource creation request is the subscriber itself; or
the CSE determines, according to the subscriber identity in the subscription resource creation request, that the recipient corresponding to the recipient identity of the notification message in the subscription resource creation request is not the subscriber itself; and the CSE sends a notification verification request message to the recipient, and receives a response message from the recipient indicating that the subscriber has permission to send a notification message to the recipient (that is, itself).

Herein the notification verification request message includes a subscriber identity.

Herein when the recipient identity of the notification message in the subscription resource creation request is the same as the subscriber identity in the subscription resource creation request, the CSE determines that the recipient corresponding to the recipient identity of the notification message in the subscription resource creation request is the subscriber itself; and when the recipient identity of the notification message in the subscription resource creation request is different from the subscriber identity in the subscription resource creation request, the CSE determines that the recipient corresponding to the recipient identity of the notification message in the subscription resource creation request is not the subscriber itself.

Herein after the CSE determines that the recipient corresponding to the recipient identity of the notification message in the subscription resource creation request is not the subscriber itself, a notification verification request message is sent to the recipient corresponding to the recipient identity of the notification message in the subscription resource creation request.

Herein the notification verification request message includes a subscriber identity.

Herein a subscriber identity having permission to send a notification message to the recipient itself is saved in the recipient.

Optionally, the method further includes:
sending to the subscriber a message indicating failed creation of the subscription resource when the CSE determines, according to the subscription resource creation request, one or more of the following conditions that:
   the subscriber does not have permission to create a subscription resource;
   the subscribed resource is not a subscribable resource;
   the subscriber does not have permission to read the subscribed resource; and
   the subscriber does not have permission to send a notification message to the recipient corresponding to the recipient identity of the notification message in the subscription resource creation request.

Optionally, the CSE determines, according to the subscription resource creation request, that the subscriber does not have permission to send a notification message to the recipient corresponding to the recipient identity of the notification message in the subscription resource creation request, including that:
the CSE determines, according to the subscriber identity in the subscription resource creation request, that the recipient corresponding to the recipient identity of the notification message in the subscription resource creation request is not the subscriber itself; and
the CSE sends a notification verification request message to the recipient according to the subscriber identity in the subscription resource creation request, and receives a response message from the recipient indicating that the subscriber does not have permission to send a notification message to the recipient.

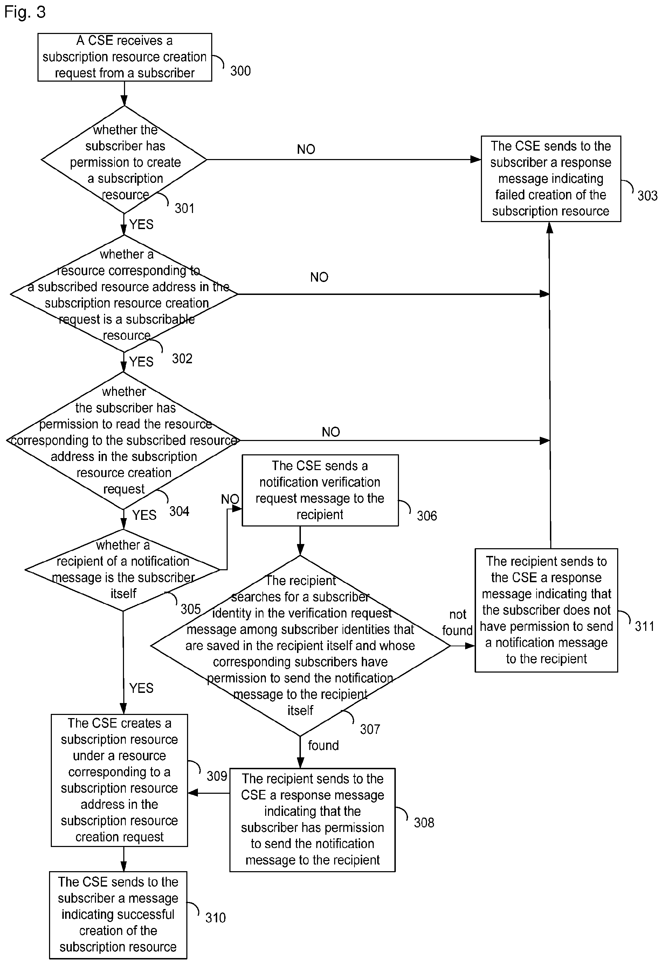

The method for creating a subscription resource is described below by way of a specific embodiment. Referring to Fig. 3, the method includes the following steps 300-311.

In Step 300, a CSE receives a subscription resource creation request from a subscriber.

In Step 301, the CSE verifies whether the subscriber has permission to create a subscription resource, if so, Step 302 is performed, and if not, Step 303 is performed.

In Step 302, the CSE detects whether a resource corresponding to a subscribed resource address in the subscription resource creation request is a subscribable resource, if so, Step 304 is performed, and if not, Step 303 is performed.

In Step 303, the CSE sends to the subscriber a response message indicating failed creation of the subscription resource.

In Step 304, the CSE verifies whether its corresponding subscriber has permission to read the resource corresponding to the subscribed resource address in the subscription resource creation request according to the subscriber identity in the subscription resource creation request, if so, Step 305 is performed, and if not, Step 303 is performed.

In Step 305, the CSE checks whether the recipient corresponding to the recipient identity of the notification message in the subscription resource creation request is the subscriber itself, if so, Step 306 is performed, and if not, Step 309 to Step 310 are performed.

In Step 306, the CSE sends a notification verification request message to the recipient.

In Step 307, the recipient searches for a subscriber identity in the verification request message among subscriber identities that are saved in the recipient itself and whose corresponding subscribers have permission to send the notification message to the recipient itself, if so, Step 308 to Step 310 are performed, and if not, Step 311 is performed.

In Step 308, the recipient sends to the CSE a response message indicating that the subscriber has permission to send a notification message to the recipient.

In Step 309, the CSE creates a subscription resource under a resource corresponding to a subscription resource address in the subscription resource creation request, sets the name of the subscription resource as the subscription resource name in the subscription resource creation request, sets the type of the subscription resource as the subscription resource type in the resource creation request, and creates the attribute of the subscription resource according to the content in the subscription resource creation request.

In Step 310, the CSE sends to the subscriber a message indicating successful creation of the subscription resource.

In Step 311, the recipient sends to the CSE a response message indicating that the subscriber does not have permission to send a notification message to the recipient.

The determination in the above Steps 301, 302, and 304, and the determination in Step 305 and the subsequent steps may be in no particular order. That is, the order of the four determinations may be arbitrary and may be parallel: whether the subscriber has permission to create a subscription resource, to read the subscribed resource and to send a notification message to the recipient corresponding to the recipient identity of the notification message in the subscription resource creation request, and whether the subscribed resource is a subscribable resource.

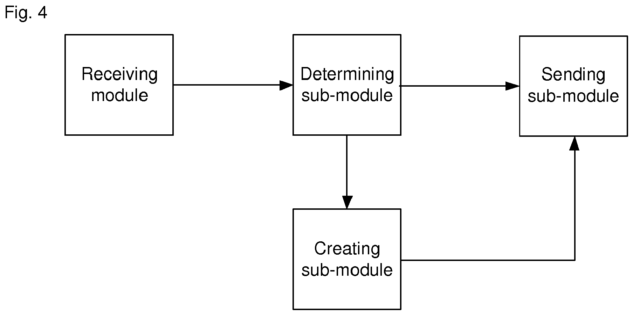

Referring to Fig. 4, an embodiment of the disclosure also provides a device for creating a subscription resource, arranged in a CSE, including:
a receiving module arranged to receive a subscription resource creation request from a subscriber; and
a processing module arranged to, when it is determined, according to the subscription resource creation request, that the subscriber has permission to create a subscription resource, to read the subscribed resource and to send a notification message to the recipient corresponding to the recipient identity of the notification message in the subscription resource creation request, and that the subscribed resource is a subscribable resource, creating a subscription resource under a resource corresponding to a subscription resource address in the subscription resource creation request, and sending to the subscriber a message indicating successful creation of the subscription resource.

Optionally, the processing module includes:
a determining sub-module;
a creating sub-module arranged to, when the determining sub-module determines, according to the subscription resource creation request, that the subscriber has permission to create a subscription resource, to read the subscribed resource and to send a notification message to the recipient corresponding to the recipient identity of the notification message in the subscription resource creation request, and that the subscribed resource is a subscribable resource, create a subscription resource under a resource corresponding to a subscription resource address in the subscription resource creation request; and
a sending sub-module arranged to send to the subscriber a message indicating successful creation of the subscription resource after the creating sub-module creates the subscription resource.

Optionally, in the device of the embodiment of the disclosure, the sending sub-module is further arranged to:
send to the subscriber a message indicating failed creation of the subscription resource when the determining sub-module determines, according to the subscription resource creation request, one or more of the following conditions that:
   the subscriber does not have permission to create a subscription resource;
   the subscribed resource is not a subscribable resource;
   the subscriber does not have permission to read the subscribed resource; and
   the subscriber does not have permission to send a notification message to the recipient corresponding to the recipient identity of the notification message in the subscription resource creation request.

Optionally, in the device of the embodiment of the disclosure, the determining sub-module determines that the subscriber has permission to send a notification message to the recipient corresponding to the recipient identity of the notification message in the subscription resource creation request, indicating that:
the determining sub-module determines, according to the subscriber identity in the subscription resource creation request, that the recipient corresponding to the recipient identity of the notification message in the subscription resource creation request is the subscriber itself; or
the determining sub-module determines, according to the subscriber identity in the subscription resource creation request, that the recipient corresponding to the recipient identity of the notification message in the subscription resource creation request is not the subscriber itself, instructs the sending sub-module to send a notification verification request message to the recipient, and knows that the receiving module receives a response message from the recipient indicating that the subscriber has permission to send a notification message to the recipient.

Optionally, in the device of the embodiment of the disclosure, the determining sub-module determines that the subscriber does not have permission to send a notification message to the recipient corresponding to the recipient identity of the notification message in the subscription resource creation request, indicating that:
the determining sub-module determines that the recipient corresponding to the recipient identity of the notification message in the subscription resource creation request is not the subscriber itself, instructs the sending sub-module to send a notification verification request message to the recipient, and knows that the receiving module receives a response message from the recipient indicating that the subscriber does not have permission to send a notification message to the recipient.

It is to be understood that the above embodiments are merely for the purpose of understanding by those skilled in the art and are not intended to limit the scope of protection of the disclosure, and that any obvious substitutions and improvements made to the disclosure by those skilled in the art are within the scope of protection of the disclosure without departing from the inventive concept of the disclosure.

### INUSTRIAL APPLICABILITY

Compared with the related art, with the solution of an embodiment of the disclosure, only after it is determined, according to the subscriber identity in the subscription resource creation request, that the subscriber has permission to send a notification message to the recipient corresponding to the recipient identity of the notification message in the subscription resource creation request, a subscription resource is created under a resource corresponding to a subscription resource address in the subscription resource creation request, thus malicious resource subscription for a user is prevented and the user's subscription experience is improved.

## Claims

1. A method for creating a subscription resource, comprising:
receiving, by a Common Service Entity (CSE), a subscription resource creation request from a subscriber; and
when the CSE determines, according to the subscription resource creation request, that the subscriber has permission to create a subscription resource, to read a subscribed resource and to send a notification message to a recipient corresponding to a recipient identity of the notification message in the subscription resource creation request, and that the subscribed resource is a subscribable resource, creating the subscription resource under a resource corresponding to a subscription resource address in the subscription resource creation request, and sending to the subscriber a message indicating successful creation of the subscription resource.

2. The method according to claim 1, further comprising:
sending to the subscriber a message indicating failed creation of the subscription resource when the CSE determines, according to the subscription resource creation request, one or more of the following conditions that:
the subscriber does not have permission to create a subscription resource;
the subscribed resource is not a subscribable resource;
the subscriber does not have permission to read the subscribed resource; and
the subscriber does not have permission to send a notification message to the recipient corresponding to the recipient identity of the notification message in the subscription resource creation request.

3. The method according to claim 1 or 2, wherein the operation that the CSE determines, according to the subscription resource creation request, that the subscriber has permission to send the notification message to the recipient corresponding to the recipient identity of the notification message in the subscription resource creation request comprises:
determining, by the CSE, according to the subscriber identity in the subscription resource creation request, that the recipient corresponding to the recipient identity of the notification message in the subscription resource creation request is the subscriber itself; or
determining, by the CSE, according to the subscriber identity in the subscription resource creation request, that the recipient corresponding to the recipient identity of the notification message in the subscription resource creation request is not the subscriber itself; and sending, by the CSE, a notification verification request message to the recipient, and receiving a response message from the recipient indicating that the subscriber has permission to send a notification message to the recipient.

4. The method according to claim 2, wherein the operation that the CSE determines, according to the subscription resource creation request, that the subscriber does not have permission to send the notification message to the recipient corresponding to the recipient identity of the notification message in the subscription resource creation request comprises:
determining, by the CSE, according to the subscriber identity in the subscription resource creation request, that the recipient corresponding to the recipient identity of the notification message in the subscription resource creation request is not the subscriber itself; and
sending, by the CSE, a notification verification request message to the recipient, and receiving a response message from the recipient indicating that the subscriber does not have permission to send a notification message to the recipient.

5. A device for creating a subscription resource, arranged in a Common Service Entity (CSE), comprising:
a receiving module arranged to receive a subscription resource creation request from a subscriber; and
a processing module arranged to, when it is determined, according to the subscription resource creation request, that the subscriber has permission to create a subscription resource, to read a subscribed resource and to send a notification message to a recipient corresponding to a recipient identity of the notification message in the subscription resource creation request, and that the subscribed resource is a subscribable resource, create the subscription resource under a resource corresponding to a subscription resource address in the subscription resource creation request, and send to the subscriber a message indicating successful creation of the subscription resource.

6. The device according to claim 5, wherein the processing module comprises:
a determining sub-module;
a creating sub-module arranged to, when the determining sub-module determines, according to the subscription resource creation request, that the subscriber has permission to create a subscription resource, to read the subscribed resource and to send a notification message to the recipient corresponding to the recipient identity of the notification message in the subscription resource creation request, and that the subscribed resource is a subscribable resource, create the subscription resource under the resource corresponding to the subscription resource address in the subscription resource creation request; and
a sending sub-module arranged to send to the subscriber the message indicating successful creation of the subscription resource after the creating sub-module creates the subscription resource.

7. The device according to claim 6, wherein the sending sub-module is further arranged to send to the subscriber a message indicating failed creation of the subscription resource when the determining sub-module determines, according to the subscription resource creation request, one or more of the following conditions that:
the subscriber does not have permission to create a subscription resource;
the subscribed resource is not a subscribable resource;
the subscriber does not have permission to read the subscribed resource; and
the subscriber does not have permission to send a notification message to the recipient corresponding to the recipient identity of the notification message in the subscription resource creation request.

8. The device according to claim 6 or 7, wherein the operation that the determining sub-module determines that the subscriber has permission to send a notification message to the recipient corresponding to the recipient identity of the notification message in the subscription resource creation request refers to:
the determining sub-module determines, according to the subscriber identity in the subscription resource creation request, that the recipient corresponding to the recipient identity of the notification message in the subscription resource creation request is the subscriber itself; or
the determining sub-module determines, according to the subscriber identity in the subscription resource creation request, that the recipient corresponding to the recipient identity of the notification message in the subscription resource creation request is not the subscriber itself, instructs the sending sub-module to send a notification verification request message to the recipient, and knows that the receiving module receives a response message from the recipient indicating that the subscriber has permission to send the notification message to the recipient.

9. The device according to claim 7, wherein the operation that the determining sub-module determines that the subscriber does not have permission to send a notification message to the recipient corresponding to the recipient identity of the notification message in the subscription resource creation request refers to:
the determining sub-module determines that the recipient corresponding to the recipient identity of the notification message in the subscription resource creation request is not the subscriber itself, instructs the sending sub-module to send a notification verification request message to the recipient, and knows that the receiving module receives a response message from the recipient indicating that the subscriber does not have permission to send the notification message to the recipient.
